(19) Europäisches Patentamt

European Patent Office

Office européen des brevets

(11) **EP 0 916 930 B1**

(12) **EUROPÄISCHE PATENTSCHRIFT**

(45) Veröffentlichungstag und Bekanntmachung des Hinweises auf die Patenterteilung:
**02.03.2005   Patentblatt 2005/09**

(51) Int Cl.$^7$: **G01F 23/26**

(21) Anmeldenummer: **98121074.3**

(22) Anmeldetag: **06.11.1998**

(54) **Schaltungsanordnung zur kapazitiven Erfassung des Füllstandes von Füllgut in einem Behälter**

Capacitive measurement circuit for measuring the level of the contents of a container

Circuit de mesure capacitive du niveau de remplissage d'un réservoir

(84) Benannte Vertragsstaaten:
**CH DE FR GB IT LI**

(30) Priorität: **12.11.1997   DE 19749884**

(43) Veröffentlichungstag der Anmeldung:
**19.05.1999   Patentblatt 1999/20**

(73) Patentinhaber: **Rechner Industrie-Elektronik GmbH**
**68623 Lampertheim (DE)**

(72) Erfinder:
  • **Pok, Ulrich**
    **06122 Halle (DE)**
  • **Kohler, Armin, Dr.**
    **68623 Lampertheim (DE)**

(74) Vertreter: **Zinngrebe, Horst, Dr.rer.nat.**
**Saalbaustrasse 11**
**64283 Darmstadt (DE)**

(56) Entgegenhaltungen:
**DE-A- 19 528 384        US-A- 4 259 865**
**US-A- 4 706 203**

**Beschreibung**

Die Erfindung betrifft eine Schaltungsanordnung zur kapazitiven Erfassung des Füllstandes von Flüssigkeiten, Schüttgütern oder dergleichen Füllgut in einem Behälter, in welchen eine gegen den Behälter isolierte Elektrodenanordnung aus koaxial übereinander gehaltenen Schirmelektroden, zwischen denen sich eine untere Referenzelektrode sowie über ihr, durch eine Schirmelektrode getrennt, eine Meßelektrode befindet, eingebracht werden kann, wobei an die Referenzelektrode ein ein erstes Gleichspannungssignal erzeugender erster Kanal und an die Meßelektrode ein ein füllstandsbestimmtes zweites Gleichspannungssignal erzeugender zweiter Kanal angeschlossen sind und das erste Gleichspannungssignal einem ausgangsseitig mit einem elektrisch leitenden Teil des Behälters gekoppelten Wechselspannungsgenerator und das zweite Gleichspannungssignal einer Signalauswerteschaltung zugeführt sind.

Die in dem Dokument DE-A-195 28 384 beschriebene Schaltungsanordnung hat die kontinuierliche Füllstandsregelung zum Ziel. Die dort erläuterte Verhältnismessung hat eine Stelle, an der das Füllstands-Anzeigesignal unabhängig von den Materialeigenschaften des Füllgutes ist; an dieser Stelle orientiert sich der Sollwert der Regelung. Die Steilheit des Anzeigesignals ist jedoch abhängig von der Dielektrizitätskonstanten $\varepsilon$ des Füllgutes. Das führt vor allem beim Nullwert und Maximalwert der Füllung zu nachteiligen Abweichungen gegenüber dem tatsächlichen Füllstand, vor allem bei extremen $\varepsilon$-Werten des Füllgutes. Die in dem Dokument vorgeschlagenen Kompensationsmaßnahmen, nämlich Steuerung der Amplitude des Wechselspannungsgenerator-Ausgangssignals oder des. Verstärkungsfaktors der Wechselspannungsverstärker, ermöglichen nur für einen eingeschränkten Wertebereich der Dielektrizitätskonstanten $\varepsilon$ akzeptable Fehlergrenzen.

Der in Anspruch 1 definierten Erfindung liegt daher die Aufgabe zugrunde, die Erfassung des Füllstandes im Behälter zu verbessern.

Ausgehend von einer Schaltungsanordnung der eingangs genannten Art ist dazu erfindungsgemäß vorgesehen, daß in der Signalauswerteschaltung das zweite Gleichspannungssignal des zweiten Kanals, ausgehend von einem vorgegebenen festen füllstandsbezogenen Signal, mit einem Korrektursignal korreliert wird, welches aus dem verstärkten und gleichgerichteten Ausgangssignal des Wechselspannungsgenerators, dem zweiten Gleichspannungssignal und dem vorgegebenen Signal abgeleitet wird, wobei das erste Gleichspannungssignal aus dem ersten Kanal durch einen dem Wechselspannungsgenerator vorgeschalteten Regelverstärker auf einem festen, durch das vorgegebene Signal bestimmten Wert gehalten wird. Die Erfindung bringt den Vorteil, daß der Füllstand zwischen einem vorgegebenen oberen Wert und einem vorgegebenen unteren Wert unabhängig von der Dielektrizitätskonstanten des Füllgutes quantitativ gemessen werden kann. Von besonderem Vorteil ist dabei, daß der Abgleich bei leerem Behälter ausreicht und bei Füllgutwechsel nicht wiederholt werden muß. Das vorgegebene Signal wird zweckmäßig so gewählt, daß es den maximalen Füllstand repräsentiert.

Um eine lineare Beziehung zwischen der Füllstandsmessung und dem tatsächlichen Füllstand unabhängig von der Behälterform sicherzustellen ist in bevorzugter Ausgestaltung der Erfindung vorgesehen, daß das Korrektursignal aus einem weiteren Signal gebildet wird, welches die geometrische Form des Behälters wenigstens im Bereich der Elektrodenanordnung repräsentiert.

Es empfiehlt sich, in der Signalauswerteschaltung ein Rechenwerk vorzusehen, in welchem das Korrektursignal gebildet wird. Ferner ist zweckmäßig, in der Signalauswerteschaltung eine Korreliereinheit vorzusehen, welche das zweite Gleichspannungssignal aus dem zweiten Kanal sowie das Korrektursignal aufnimmt und daraus ein den aktuellen Füllstand repräsentierendes Füllstandssignal erzeugt. Schließlich ist vorteilhaft, den ersten und den zweiten Kanal elektrisch identisch mit gleichen Kennlinien aufzubauen, wobei die Verstärkungen in den beiden Kanälen im Betrieb jedoch unterschiedlich sein können. Zur Bildung des verstärkten und gleichgerichteten Ausgangssignals des Wechselspannungsgenerators ist zweckmäßig ein dritter Kanal vorgesehen, der mit dem ersten und dem zweiten Kanal elektrisch identisch ist und feste Verstärkung aufweist. Im übrigen kann jeder Kanal eine Reihenschaltung aus einem Wechselspannungsverstärker und einem Gleichrichter umfassen.

Um bei extrem niedrigem Füllstand im Behälter Fehlanzeigen zu vermeiden ist in Weiterbildung der Erfindung in der Signalauswerteschaltung eine Grenzwertschaltung vorgesehen, welche das zweite Gleichspannungssignal, das vorgegebene Signal und das verstärkte und gleichgerichtete Ausgangssignal des Wechselspannungsgenerators aufnimmt und ausgangsseitig mit der Korreliereinheit derart gekoppelt ist, daß bei einem Füllstand unterhalb der Meßelektrode das Füllstandssignal auf Null gesetzt wird. An die Grenzwertschaltung kann eine Alarmeinrichtung angeschlossen sein.

Zum Abgleich empfiehlt sich eine Abgleicheinrichtung, der eingangsseitig das zweite Gleichspannungssignal, das verstärkte und gleichgerichtete Ausgangssignal des Wechselspannungsgenerators sowie das vorgegebene Signal zum Abgleich der Verstärkungen des ersten und des zweiten Kanals zugeführt sind. In besonders einfacher Ausgestaltung weist die Abgleicheinrichtung einen Komparator sowie gegebenenfalls eine nachgeschaltete Anzeigeeinrichtung auf

Besonders einfach gestaltet sich die Erfindung, wenn der Behälter wenigstens im Bereich der Elektrodenanordnung einen konstanten, insbesondere zylindrischen Querschnitt hat. Das Korrektursignal kann dann nach der Relation

$$U_K = U_{GA}(U_o - U_M)/(U_o - U_{GA})$$

gebildet werden, wobei $U_K$ die Spannung des Korrektursignals, $U_{GA}$ die Spannung des verstärkten und gleichgerichteten Ausgangssignals des Wechselspannungsverstärkers und $U_M$ die Spannung des zweiten Gleichspannungssignals und $U_o$ die Spannung des vorgegebenen Signals bedeuten. Hierbei kann die Korreliereinheit ein einfacher Subtrahierer sein und es empfiehlt sich weiterhin, eine Gleichspannungsquelle vorzusehen, von welcher das vorbestimmte Signal einem Eingang eines Rechenwerkes, einem Eingang des Regelverstärkers sowie der Grenzwertschaltung zugeführt ist.

Im übrigen sind bevorzugte Ausführungsformen der Erfindung in den Unteransprüchen angegeben.

Das erfindungsgemäße Füllstands-Anzeigesignal $U_F$ ist dem Füllstand des Füllgutes im Behälter für den gesamten relevanten Wertebereich der Dielektrizitätskonstanten $\varepsilon$ linear zugeordnet. Die erfindungsgemäße Schaltungsanordnung läßt sich sehr leicht an die jeweilige Behältergeometrie anpassen und eichen.

In einer Weiterbildung der Erfindung kann das Füllstands-Anzeigesignal $U_F$ in einer dem Subtrahierer nachgeschalteten Ausgangsstufe in ein genormtes Ausgangssignal umgesetzt werden. Zum Inbetriebnahme-Abgleich werden zweckmäßig die Ausgangssignale des zweiten und dritten Kanals mit dem Signal $U_o$ einem Komparator zugeführt, an welchen ein Abgleichindikator angeschlossen sein kann. Ferner empfiehlt es sich, das Signal $U_o$ und das Signal $U_{GA}$ einem zweiten Komparator zuzuführen, dessen Ausgang mit dem Rücksetzanschluß des Subtrahierers verbunden ist. Vorteilhafterweise kann dann der Ausgang des zweiten Komparators mit dem Eingang einer Signal-Ausgangsstufe verbunden sein.

Nach einer bevorzugten Ausgestaltung der Erfindung wird ein regelbarer Wechselspannungsgenerator mit seinem heißen" Ende mit dem Behälter, der elektrisch leitend oder mit einer elektrisch leitenden Auskleidung versehen sein kann, verbunden, eine am Meßfühler unten angeordnete Referenz-Elektrode über Koaxialkabel an einen ersten Kanal, bestehend aus einem linearen und wahlweise regelbaren Wechselspannungsverstärker mit nachfolgendem Gleichrichter, angekoppelt und dessen Ausgangsspannung einem Regelverstärker zugeführt, der seinerseits den Stelleingang des regelbaren Wechselspannungsgenerators ansteuert. Für den Regelverstärker wird eine stabilisierte Spannung, als $U_o$ bezeichnet, als Sollwert vorgegeben.

Weiterhin wird das Ausgangssignal des Wechselspannungsgenerators über einen Koppelkondensator einem dritten Kanal, bestehend aus einem Wechselspannungsverstärker mit nachgeschaltetem Gleichrichter, zugeführt.

Die im Meßfühler oben angeordnete Meßelektrode ist mit einem zweiten Kanal verbunden. Alle drei Kanäle haben gleiche Kennlinie und sind im Aufbau bis auf eine fakultative Regelbarkeit identisch.

Das Ausgangssignal $U_{GA}$ des dritten Kanals, das proportional abhängig von der Amplitude des Wechselspannungsgenerator-Ausgangssignals ist, wird einem Abgleichkomparator zugeführt und dort mit dem Spannungswert $U_o$ verglichen. Über die Einstellung der . Spannungsverstärkung des ersten oder des dritten Kanals wird bei leerem Behälter dieses Ausgangssignal $U_{GA}$ mit dem Spannungswert $U_o$ in Übereinstimmung gebracht, angezeigt durch einen entsprechenden Abgleichindikator.

Zu Beginn wird der Behälter mit Füllgut der Dielektrizitätskonstanten $\varepsilon_r$ oder bei isolierten Meßelektroden mit leitfähigem Füllgut bis zur vollständigen Bedeckung der Referenz-Elektrode gefüllt. Der Regelkreis, der den Wechselspannungsgenerator, die Referenzelektrode, den ersten Kanal und den Regelverstärker umfaßt, bewirkt, daß der Pegel des Ausgangssignals des ersten Kanals konstant bleibt, was durch Herabregeln der Amplitude des Wechselspannungsgenerators erfolgt. Somit entsteht am Ausgang des dritten Kanals eine Spannung, die exakt dem Wert $U_o/\varepsilon_r$ entspricht. Dieser Wert bleibt erhalten, wenn der Füllstand die untere Referenz-Elektrode übersteigt.

Der zweite Kanal wird ebenso wie der erste oder dritte Kanal abgeglichen, d.h. im Leerzustand des Behälters stimmt das Ausgangssignal mit dem Spannungswert $U_o$ überein.

Nachdem beide Kanäle in dieser Weise abgeglichen sind, und die Referenz-Elektrode geflutet wird, d.h. der Behälter soweit mit Füllgut befüllt wird, bis die Referenzelektrode mit Füllgut bedeckt ist, die obere Elektrode jedoch noch frei bleibt, folgt das Ausgangssignal $U_M$ des zweiten Kanals exakt dem Wert $U_o/\varepsilon_r = U_{GA}$. Erst wenn der Füllstand die obere Elektrode erreicht, übersteigt das Ausgangssignal $U_M$ des zweiten Kanals den Wert $U_{CA}$, bei völliger Bedeckung erreicht $U_M$ wieder den Wert $U_o$.

Das Ausgangssignal UM des zweiten Kanals erreicht also bei völliger Bedeckung seinen Maximalwert, der Minimalwert ist aber mit $U_o/\varepsilon_r$ festgelegt und damit abhängig von der Dielektrizitätskonstanten des Füllgutes.

Dieser materialabhängige Wert $U_o/\varepsilon_r$ wird zur Ermittlung einer Korrekturgröße $U_k$ herangezogen. Diese Korrekturgröße soll zu Beginn der Messung, also bei völlig bedeckter Referenzelektrode und obere Elektrode frei, dem Wert $U_o/\varepsilon_r$ entsprechen.Bei Subtraktion dieses Wertes vom Signal $U_M$ ergibt sich also für den Meßbeginn für $U_M$=Null. Bei völlig gefluteter oberer Elektrode soll $U_M$ den Wert $U_o$ annehmen, hier muß also die abzuziehende Korrekturgröße den Wert Null haben. Es ergibt sich also für UM ein Ausgangssignalbereich von Null bis $U_o$ für

$$U_A = U_M - U_K$$

Die Berechnung dieser Korrekturgröße ist gemäß der Beziehung

$$U_k = (U_o - U_M)/(\varepsilon_r - 1)$$

möglich. Eine mögliche Umformung dieser Beziehung in Größen, die als Signale vorhanden sind, lautet

$$U_k = U_{GA}(U_o - U_M)/(U_o - U_{GA})$$

Bei leerem Behälter wird ein Komparator benutzt, dessen Umschaltpunkt etwa bei 90% des Wertes $U_o$ liegt und der mit dem Ausgang des dritten Kanals ($U_{GA}$) verbunden ist. Solange bei steigender Bedeckung der Referenzelektrode das Signal $U_{GA}$ größer als 90% von $U_o$ ist, setzt dieser Komparator das Ausgangssignal zwangsweise auf Null. Sobald aber das Signal $U_{GA}$ kleiner als $U_o$ wird, ist die Berechnung des Korrekturfaktors möglich. Die Absenkung auf 90% von $U_o$ erfolgt bereits bei geringer Bedeckung der Referenz-Elektrode auch bei einem Füllgut von niedrigem $\varepsilon$; die Berechnung des Korrekturfaktors setzt also schon ein, bevor die eigentliche Messung im Bereich der oberen Elektrode beginnt.

Die erfindungsgemäße Anordnung hat den großen Vorteil, daß bei der Inbetriebnahme der Messung ein Abgleich nur bei leerem Behälter vorgenommen werden muß, der durch einen Abgleichindikator (z. B. LED) ohne weitere Hilfsmittel möglich ist. Das Meßprinzip sichert, daß bei erfolgreichem Abgleich die Funktion der Schaltungsanordnung gewährleistet ist. Fehlerhafte Montage, Falschdimensionierung oder anderen Ursachen lassen sich dadurch leicht erkennen, daß ein Abgleich nicht möglich ist.

Ein Ausführungsbeispiel der Erfindung ist in dem beigefügten Blockschaltbild dargestellt und wird nachstehend im einzelnen erläutert.

In einem elektrisch leitfähigen, oben und unten offenen Behälter 1, der aus Metall bestehen oder mit einer leitfähigen Außen- oder Innenbeschichtung versehen sein kann, ist ein im ganzen mit 2 bezeichneter Meßfühler auf nicht dargestellte Weise gehalten. Der Meßfühler 2 weist ein isolierendes Rohr als Träger für eine Elektrodenanordnung auf, zu der im Rohr koaxial übereinander mit Abstand befestigte Schirmelektroden 5a, 5b,und 5c sowie eine untere Referenzelektrode 3 und eine obere Meßelektrode 4 gehören. Das Rohr dient in erster Linie zum Schutz der Elektrodenanordnung, kann aber auch entfallen, wenn das Füllgut elektrisch isolierend ist und die Elektroden in anderer Weise gehalten sind.

Die untere Referenzelektrode 3 ist zwischen der untersten Schirmelektrode 5c und der nach oben nächstfolgenden Schirmelektrode 5b und die Meßelektrode 4 ist zwischen der Schirmelektrode 5b und der obersten Schirmelektrode 5a jeweils mit geringem Abstand zu den Schirmelektroden im Rohr angeordnet. Die Meßelektrode 4 hat eine axiale Länge, die dem zu erfassenden axialen Füllstandsbereich des Füllgutes im Behälter 1 entspricht. Im Bereich der Elektrodenanordnung ist der Behälter 1 zylindrisch. In den Behälter 1 kann von oben ein beliebiges nicht dargestelltes Füllgut, dessen Füllstand in dem Behälter zu erfassen ist, eingefüllt sein.

Die Seele eines Koaxialkabels 7b, dessen Schutzmantel auf Bezugspotential liegt, ist an einem Ende mit der Referenzelektrode 3 und am anderen Ende mit dem Eingang eines ersten Kanals 8 verbunden. Die Seele eines weiteren Koaxialkabels 7a, dessen Schutzmantel ebenfalls auf Bezugspotential liegt, ist an einem Ende mit der Meßelektrode 4 und am anderen Ende mit dem Eingang eines zweiten Kanals 10 verbunden. Mit dem Behälter 1 bzw. seiner Beschichtung ist eine Ausgangsleitung 30 eines regelbaren Wechselspannungsgenerators 6 verbunden, die auf hohem Potential liegt. Damit entsteht eine kapazitive Ankopplung der Referenzelektrode 3 sowie der Meßelektrode 4 an die Ausgangsleitung 30, die durch die Befüllung des Behälters mit Füllgut entsprechend dessen $\varepsilon_r$ sowie durch die Höhe der Befüllung verändert wird.

Der erste Kanal 8 und der zweite Kanal 10 sind elektrisch identisch aufgebaut und umfassen jeweils einen stellbaren Verstärker mit nachgeschaltetem Gleichrichter und besitzen gleiche Kennlinie.

Eine Ausgangsleitung 32 des ersten Kanals 8 führt ein Istsignal aus dem Kanal 8 zu einem ersten Eingang eines Regelverstärkers 9. Ein zweiter Eingang des Regelverstärkers 9 nimmt über eine Leitung 33 aus einer Spannungsquelle 15 eine feste Gleichspannung vom Sollwert $U_o$ auf, der beispielsweise 10 Volt betragen kann. Eine Ausgangsleitung 34 des Regelverstärkers 9 führt ein Stellsignal zu einem Stelleingang des Wechselspannungsgenerators 6, so daß ein geschlossener Regelkreis entsteht.

Das Ausgangssignal UM aus dem zweiten Kanal 10 wird einerseits über eine Leitung 35 einem ersten Eingang eines Subtrahierers 17 und andererseits über eine Leitung 29 einem ersten Eingang eines Rechenwerkes 16 und schließlich über eine Leitung 37 einem zweiten Eingang eines Komparators 13 zugeführt. Ein zweiter Eingang des Rechenwerkes 16 nimmt über eine Leitung 40 das Ausgangssignal $U_{GA}$ aus einem dritten Kanal 11 auf, dessen Eingang über einen Kondensator 12 und eine Leitung 41 das auf Leitung 30 anstehende Ausgangssignal des Wechselspannungsgenerators 6 erhält und der einen Verstärker mit nachgeschaltetem Gleichrichter umfaßt. Der dritte Kanal 11 ist bis auf die fehlende Stellbarkeit seines Verstärkers identisch zu den Kanälen 8 und 10 und besitzt gleiche Kennlinie wie diese. Das Ausgangssignal $U_{GA}$ ist daher proportional abhängig von der Amplitude des Wechselspannungsgenerator-Ausgangssignals auf Leitung 30.

An einem dritten Eingang des Rechenwerkes 16 schließlich steht die über Leitung 38 herangeführte Sollspannung Uo aus der Gleichspannungquelle 15 an.

Aus den aufgenommenen Gleichspannungssignalen $U_M$, $U_{GA}$ und $U_o$ bildet das Rechenwerk 16 ein Korrektursignal $U_K$ entsprechend der Relation

$$U_K = U_{GA}(U_o - U_M)/(U_o - U_{GA}),$$

das über eine Ausgangsleitung 39 des Rechenwerkes 16 einem zweiten Eingang des Subtrahierers 17 zugeführt wird. Aus der Differenz der Signale $U_M$ und $U_K$ bildet der Subtrahierer 17 ein Füllstands-Anzeigesignal $U_F$, welches mit dem Bedeckungsgrad der Meßelektrode 4 zwischen dem Anfangswert Null und dem Endwert $U_o$ linear korreliert ist und daher den Füllstand im Behälter 1 anzeigt. Das Ausgangssignal $U_F$ des Subtrahierers 17 kann in einer nachgeschalteten Ausgangsstufe 18 in ein gewünschtes Standard-Ausgangssignal umgewandelt werden.

Das Ausgangssignal $U_{GA}$ aus dem dritten Kanal 11 gelangt über eine aus der Leitung 40 abzweigende Leitung 42 einerseits auf einen Eingang eines weiteren Komparators 19 und - andererseits über eine von der Leitung 42 abzweigende Leitung 43 auf einen dritten Eingang des Komparators 13, dessen erster Eingang die Spannung $U_o$ aus der Gleichspannungsquelle 15 über Leitung 31 erhält. Dem Komparator 13 ist ein Abgleichindikator 14 nachgeschaltet, der beispielsweise eine LED enthalten kann..

An einem Eingang eines Spannungsteilers 20 liegt über eine von der Leitung 38 abzweigende Leitung 36 die Spannung $U_o$ an, der aus dieser einen vorgegebenen Bruchteil von beispielsweise 90% ihres absoluten Wertes bildet, der einem vorgegebenen minimalen Bedeckungsgrad der Referenzelektrode 3 durch das Füllgut entspricht. Über eine Ausgangsleitung 44 wird ein den Bruchteil repräsentierendes Signal einem zweiten Eingang des weiteren Komparators 19 zuleitet. Stellt der weitere Komparator 19 fest, daß das aufgenommene Signal $U_{GA}$ kleiner ist als der Bruchteil, erzeugt er auf seiner zum Rückstellanschluß des Subtrahierers 17 führenden Ausgangsleitung 45 ein Signal, welches das Ausgangssignal $U_F$ des Subtrahierers auf Null setzt.

Ein zweiter Ausgang 46 des weiteren Komparators 19 liegt am Eingang einer Schaltstufe 21 mit binärem Ausgangssignal. Dieses stellt ein Alarmsignal für den Fall dar, daß das Signal $U_{GA}$ kleiner als der Bruchteil ist, der Füllstand im Behälter 1 also weit unterhalb des Normbereichs liegt.

Zum Abgleich wird bei leerem Behälter 1 die Spannungsverstärkung zunächst im ersten Kanal 8 so eingestellt, daß das Signal $U_{GA}$ mit dem Wert von $U_o$ übereinstimmt, was am Abgleichindikator 14 abgelesen werden kann. Sodann wird bei noch leerem Behälter 1 die Spannungsverstärkung im zweiten Kanal 10 so eingestellt, daß auch das Signal $U_M$ den Wert $U_o$ annimmt. Daraus folgt, daß die Spannungsverstärkung in den beiden Kanälen 8 und 10 verschieden ist.

Sodann wird der Behälter 1 mit Füllgut der Dielektrizitätskonstanten $\varepsilon_r$ oder bei beispielsweise durch das Kunststoffrohr isolierten Elektroden mit leitfähigem Füllgut bis zur vollständigen Bedeckung der Referenzelektrode 3 gefüllt. Der Regelkreis, der den Wechselspannungsgenerator 6, die Referenzelektrode 3, den ersten Kanal 8 und den Regelverstärker 9 umfaßt, bewirkt, daß der Pegel des Signals auf Leitung 32 durch Herabregeln der Amplitude des Wechselspannungsgenerator-Ausgangssignals auf Leitung 30 konstant bleibt. Dieser Wert bleibt erhalten, wenn der Füllstand die Referenzelektrode 3 übersteigt. Solange die Meßelektrode 4 von Füllgut frei bleibt, nimmt auch das Signal $U_M$ den . Wert $U_o/\varepsilon_r$ an, der sein unterer Grenzwert ist. Bei völliger Bedeckung der Meßelektrode 4 mit Füllgut erreicht das Signal $U_M$ den Wert $U_o$., der sein oberer Grenzwert ist.

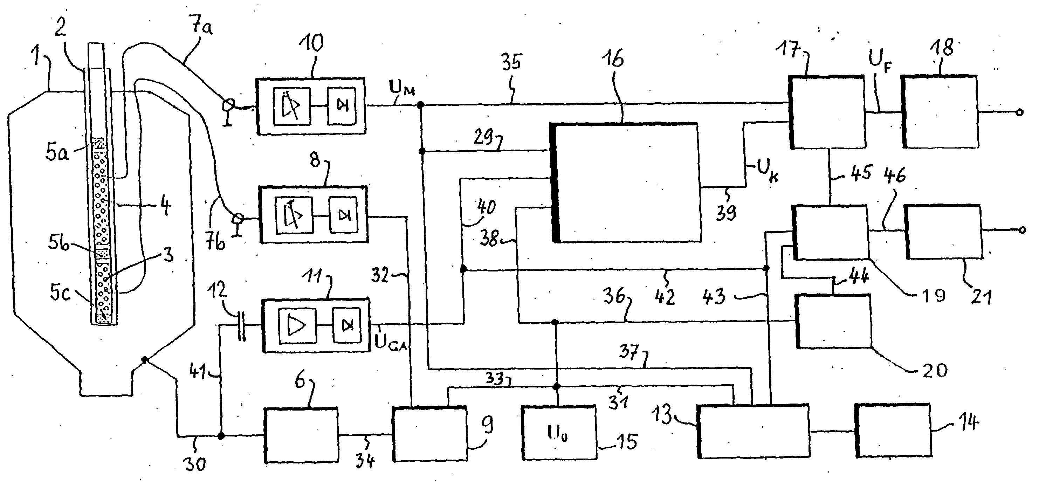

## Patentansprüche

1. Schaltungsanordnung zur kapazitiven Erfassung des Füllstandes von Flüssigkeiten, Schüttgütern oder dergleichen Füllgut in einem Behälter (1), zur Verwendung mit einer gegen den Behälter isolierten Elektrodenanordnung, die in den Behälter (1) eingebracht werden kann, bestehend aus koaxial übereinander gehaltenen Schirmelektroden (5a, 5c), zwischen denen sich eine untere Referenzelektrode (3) sowie über ihr, durch eine weitere Schirmelektrode (5b) von der Referenzelektrode (3) getrennt, eine Meßelektrode (4) befindet, wobei an die Referenzelektrode (3) ein ein erstes Gleichspannungssignal erzeugender erster Verstärker kanal (8) der Schaltungsanordnung und an die Meßelektrode (4) ein ein füllstands abhängiges zweites Gleichspannungssignal ($U_M$) erzeugender zweiter Verstärker kanal (10) der Schaltungsanordnung angeschlossen sind und das erste Gleichspannungssignal einem ausgangsseitig mit einem elektrisch leitenden Teil des Behälters (1) gekoppelten Wechselspannungsgenerator (6) der Schaltungsanordnung und das zweite Gleichspannungssignal ($U_M$) einer Signalauswerteschaltung der Schaltungsanordnung zugeführt sind, **dadurch gekennzeichnet, daß**

   in der Signalauswerteschaltung (16, 17) das zweite Gleichspannungssignal ($U_M$) des zweiten Kanals (10), ausgehend von einem vorgegebenen festen Gleichspannungssignal ($U_o$), zwecks Erzeugung eines Füllstandssignals ($U_F$), mit einem Korrektursignal ($U_K$) korreliert wird, welches aus dem verstärkten und gleichgerichteten Ausgangssignal ($U_{GA}$) des Wechselspannungsgenerators (6), dem zweiten Gleichspannungssignal ($U_M$) und dem vorgegebenen Signal ($U_o$) abgeleitet wird, wobei das erste Gleichspannungssignal aus dem ersten Kanal (8) durch einen dem Wechselspannungsgenerator (6) vorgeschalteten Regelverstärker (9) der Schaltungsanordnung auf einem festen, durch das vorgegebene Signal ($U_o$) bestimmten Wert gehalten wird.

2. Schaltungsanordnung nach Anspruch 1, **dadurch gekennzeichnet, daß** das Korrektursignal ($U_K$) aus einem weiteren Signal gebildet wird, welches die geometrische Form des Behälters (1) im Bereich der Elektrodenanordnung repräsentiert.

3. Schaltungsanordnung nach Anspruch 1 oder 2, **dadurch gekennzeichnet, daß** die Signalausweteschaltung ein Rechenwerk (16) aufweist, in welchem das Korrektursignal ($U_K$) gebildet wird.

4. Schaltungsanordnung nach einem der vorstehenden Ansprüche, **dadurch gekennzeichnet, daß** die Signalausweteschaltung eine Korreliereinheit (17) aufweist, welche das zweite Gleichspannungssignal ($U_M$) aus dem zweiten Kanal (10) sowie das Korrektursignal ($U_K$) aufnimmt und daraus ein den aktuellen Füllstand repräsentierendes Füllstandssignal ($U_F$) erzeugt.

5. Schaltungsanordnung nach einem der vorstehenden Ansprüche, **dadurch gekennzeichnet, daß** der erste Kanal (8) und der zweite Kanal (10) elektrisch identisch mit gleicher Kennlinie aufgebaut sind, im Betrieb jedoch unterschiedliche Verstärkungen aufweisen.

6. Schaltungsanordnung nach einem der vorstehenden Ansprüche, **dadurch gekennzeichnet, daß** an den mit dem leitfähigen Teil des Behälters (1) gekoppelten Ausgang (30) Wechselspannungsgenerators (6) ein dritter Kanal (11) kapazitiv angeschlossen ist, der mit dem ersten und zweiten Kanal elektrisch identisch ist und eine feste Verstärkung aufweist.

7. Schaltungsanordnung nach einem der vorstehenden Ansprüche **dadurch gekennzeichnet, daß** jeder Kanal (8, 10, 11) eine Reihenschaltung aus einem Wechselspannungsverstärker und einem Gleichrichter aufweist.

8. Schaltungsanordnung nach einem der Ansprüche 4 bis 6, **dadurch gekennzeichnet, daß** die Signalausweteschaltung eine Grenzwertschaltung (19, 20) enthält, welche das zweite Gleichspannungssignal ($U_M$), das vorgegebene Signal ($U_o$) und das verstärkte und gleichgerichtete Ausgangssignal ($U_{GA}$) des Wechselspannungsgenerators (6) aufnimmt und ausgangsseitig mit der Korreliereinheit (17) derart gekoppelt ist, daß bei zu niedrigem Füllstand das Füllstandssignal ($U_F$) auf Null gesetzt ist.

9. Schaltungsanordnung nach Anspruch 8, **dadurch gekennzeichnet, daß** an die Grenzwertschaltung ausgangsseitig eine Alarmeinrichtung (21) angeschlossen ist.

10. Schaltungsanordnung nach einem der vorstehenden Ansprüche, **dadurch gekennzeichnet, daß** das vorgegebene Signal ($U_o$) derart gewählt ist, daß es den maximalen Füllstand repräsentiert.

11. Schaltungsanordnung nach einem der vorstehenden Ansprüche, **gekennzeichnet durch** eine Abgleicheinrichtung (13, 14), welcher eingangsseitig das zweite Gleichspannungssignal ($U_M$), das verstärkte und gleichgerichtete Ausgangssignal ($U_{GA}$) des Wechselspannungsgenerators (6) sowie das vorgegebene Signal ($U_o$) zum Abgleich der Verstärkungen des ersten und zweiten Kanals zugeführt sind.

12. Schaltungsanordnung nach Anspruch 11, **dadurch gekennzeichnet, daß** die Abgleicheinrichtung einen Komparator (13) mit gegebenenfalls nachgeschalteter Anzeigeeinrichtung (14) aufweist.

13. Schaltungsanordnung nach einem der vorstehenden Ansprüche mit einem Behälter (1), der wenigstens im Bereich der Elektrodenanordnung einen konstanten, insbesondere zylindrischen Querschnitt hat, **dadurch gekennzeichnet daß** das Korrektursignal ($U_K$) entsprechend folgender Relation gebildet wird

$$U_k = U_{GA}(U_0 - U_M)/(U_0 - U_{GA}).$$

14. Schaltungsanordnung nach Anspruch 13, **dadurch gekennzeichnet, daß** die Korreliereinheit ein Subtrahierer (17) ist, der eingangsseitig mit dem Ausgang des zweiten Kanals (10) und dem Ausgang des Rechenwerkes (16) verbunden ist.

15. Schaltungsanordnung nach einem der Ansprüche 13 oder 14, **dadurch gekennzeichnet, daß** die Signalauswerteschaltung eine Gleichspannungsquelle (15) aufweist, von welcher das vorbestimmte Signal ($U_o$) einem Eingang des Rechenwerkes (16), einem Eingang des Regelverstärkers (9) sowie der Grenzwertschaltung (19, 20) zugeführt ist.

16. Schaltungsanordnung nach einem der Ansprüche 13 bis 15, **dadurch gekennzeichnet, daß** dem Subtrahierer (17) eine Signalformer (18) nachgeschaltet ist, welcher aus dem Füllstandssignal ($U_F$) ein standardisiertes Füllstandsanzeigesignal bildet,

17. Schaltungsanordnung nach einem der Ansprüche 13 bis 16, **dadurch gekennzeichnet, daß** die Grenzwertschaltung einen an die Gleichspannungsquelle (15) eingangsseitig angeschlossenen Spannungsteiler (20) aufweist, welcher aus dem vorgegebenen Signal ($U_o$) einen vom unteren Grenzwert des Füllstandes bestimmten Bruchteil bildet und einem weiteren Komparator (19) zuführt, der eingangsseitig das verstärkte und gleichgerichtete Ausgangssignal ($U_{GA}$) des Wechselspannungsgenerators (6) aufnimmt und ausgangsseitig mit einem Rücksetzeingang des Subtrahierers (17) verbunden ist.

18. Schaltungsanordnung nach Anspruch 17, **dadurch gekennzeichnet, daß** der weitere Komparator (19) ausgangsseitig mit der Alarmeinrichtung (21) verbunden ist.

**Claims**

1. Circuit arrangement for capacitive detection of the fill level of liquids, bulk goods or similar substances in a container (1), for use with an electrode arrangement insulated in relation to the container, said electrode arrangement being introducible into the container (1), comprising shield grid electrodes (5a, 5c) held one over the other coaxially, between which are situated a lower reference electrode (3) and over it, separated from the reference electrode (3) by a further shield grid electrode (5b), a measuring electrode (4), whereby connected to the reference electrode (3) is a first amplifier channel (8) of the circuit arrangement generating a first direct current signal and connected to the measuring electrode (4) is a second amplifier channel (10) of the circuit arrangement generating a second direct current signal ($U_M$) dependent upon the fill level, and the first direct current signal is fed to an alternating voltage generator (6) of the circuit arrangement coupled on the output side to an electrically conducting portion of the container (1) and the second direct current signal ($U_M$) is fed to a signal analysis circuit of the circuit arrangement, **characterised in that** in the signal analysis circuit (16, 17), the second direct current signal ($U_M$) of the second channel (10) is correlated, starting from a given fixed direct current signal ($U_0$) for the purpose of generating a fill level signal ($U_F$), with a correction signal ($U_K$), which is derived from the amplified and rectified starting signal ($U_{GA}$) of the alternating voltage generator (6), the second direct current signal ($U_M$) and the given signal ($U_0$), whereby the first direct current signal from the first channel (8) is held by a variable gain amplifier (9) of the circuit arrangement connected upstream of the alternating voltage generator (6) at a fixed value determined by the given signal ($U_0$).

2. Circuit arrangement according to claim 1, **characterised in that** the correction signal ($U_K$) comprises a further signal representing the geometrical form of the container (1) in the region of the electrode arrangement.

3. Circuit arrangement according to claim 1 or 2, **characterised in that** the signal analysis circuit has an arithmetical unit (16) in which the correction signal ($U_K$) is formed.

4. Circuit arrangement according to one of the previous claims, **characterised in that** the signal analysis circuit has a correlating unit (17), which accepts the second direct current signal ($U_M$) from the second channel (10) and the correction signal ($U_K$), and from them generates a fill level signal ($U_F$) representing the current fill level.

5. Circuit arrangement according to one of the previous claims, **characterised in that** the first channel (8) and the second channel (10) are designed electrically identical with the same characteristic curve, although in operation they bring about different levels of amplification.

6. Circuit arrangement according to one of the previous claims, **characterised in that** a third channel (11) is capacitively connected to the output (30) of the alternating voltage generator (6) coupled to the conductive portion of the container (1), said channel being electrically identical to the first and second channel and having a fixed amplification level.

7. Circuit arrangement according to one of the previous claims, **characterised in that** each channel (8, 10, 11) has a series circuit comprising an alternating voltage amplifier and a rectifier.

8. Circuit arrangement according to one of the claims 4 to 6, **characterised in that** the signal analysis circuit includes a limit value circuit (19, 20), which accepts the second direct current signal ($U_M$), the given signal ($U_0$) and the amplified and rectified output signal ($U_{GA}$) of the alternating voltage generator (6) and is coupled on the output side to the correlating unit (17) such that if the fill level is too low, the fill level signal ($U_F$) is set to zero.

9. Circuit arrangement according to claim 8, **characterised in that** an alarm device (21) is connected to the limit value circuit on the output side.

10. Circuit arrangement according to one of the previous claims, **characterised in that** the given signal ($U_0$) is chosen such that it represents the maximum fill level.

**11.** Circuit arrangement according to one of the previous claims, **characterised in that** it has an adjusting device (13, 14) to which are fed on the input side the second direct current signal ($U_M$), the amplified and rectified output signal ($U_{GA}$) of the alternating voltage generator (6) and the given signal ($U_0$) for adjusting the amplification levels of the first and second channels.

**12.** Circuit arrangement according to claim 11, **characterised in that** the adjusting device has a comparator (13) with a display device (14) possibly connected downstream.

**13.** Circuit arrangement according to one of the previous claims with a container (1), which has a constant, particularly cylindrical, cross-section in the region of the electrode arrangement, **characterised in that** the correction signal ($U_K$) is formed according to the following relation

$$U_K = U_{GA}(U_0-U_M)/(U_0-U_{GA}).$$

**14.** Circuit arrangement according to claim 13, **characterised in that** the correlating unit is a subtractor (17) which is linked on the input side to the output of the second channel (10) and the output of the arithmetical unit (16).

**15.** Circuit arrangement according to one of the claims 13 or 14, **characterised in that** the signal analysis circuit has a direct current source (15), from which the given signal ($U_0$) is fed to an input of the arithmetical unit (16), an input of the variable gain amplifier (9) and the limit value circuit (19, 20).

**16.** Circuit arrangement according to one of the claims 13 to 15, **characterised in that** connected downstream of the subtractor (17) is a signal conditioner (18) which forms a fill level indicator signal from the fill level signal ($U_F$).

**17.** Circuit arrangement according to one of the claims 13 to 16, **characterised in that** the limit value circuit has a voltage divider (20) connected to the direct current source (15) on the input side, said voltage divider forming from the given signal ($U_0$) a fraction determined from the lower limit value of the fill level and feeding it to a further comparator (19), which accepts on the input side the amplified and rectified output signal ($U_{GA}$) of the alternating voltage generator (6) and is linked on the output side to a reset input of the subtractor (17).

**18.** Circuit arrangement according to claim 17, **characterised in that** the further comparator (19) is linked on the output side to the alarm device (21).

**Revendications**

**1.** Circuit pour la mesure capacitive du niveau de remplissage de liquides, de produits en vrac, ou de produits de remplissage similaires, dans un récipient (1), pour l'utilisation avec un ensemble d'électrodes isolé par rapport au récipient et pouvant être introduit dans le récipient (1) formé par des électrodes de protection (5a, 5c) maintenues coaxialement l'une au-dessus de l'autre, entre lesquelles se trouve une électrode de référence (3) inférieure, ainsi qu'au-dessus de celle-ci, une électrode de mesure (4) séparée de l'électrode de référence (3) par un autre écran de protection (5b), moyennant quoi l'on raccorde à l'électrode de référence (3) un premier canal d'amplification (8) du circuit générant un premier signal à tension continue, et à l'électrode de mesure (4), un deuxième canal d'amplification (10) du circuit générant un deuxième signal à tension continue ($U_M$) dépendant du niveau de remplissage, et moyennant quoi le premier signal à tension continue est dirigé vers une génératrice de courant alternatif (6) du circuit, laquelle est couplée du côté de la sortie avec une partie électroconductrice du récipient (1), le deuxième signal à tension continue ($U_M$) étant dirigé vers un circuit d'évaluation des signaux du circuit, **caractérisé en ce que** dans le circuit d'évaluation des signaux (16, 17), le deuxième signal à tension continue ($U_M$) du deuxième canal (10), en partant d'un signal à tension continue fixe de consigne (Uo), est mis en corrélation avec un signal de correction ($U_K$) pour la génération d'un signal de niveau de remplissage ($U_F$), lequel signal de correction est déduit à partir du signal de sortie ($U_{GA}$) amplifié et démodulé de la génératrice de courant alternatif (6), du deuxième signal à tension continue ($U_M$), et du signal de consigne ($U_0$), moyennant quoi le premier signal à tension continue issu du premier canal (8) est maintenu, grâce à un amplificateur de réglage (9) du circuit branché en amont de la génératrice de courant alternatif (6), à une valeur définie et fixe déterminée par le signal de consigne ($U_0$).

**2.** Circuit selon la revendication 1, **caractérisé en ce que** le signal de correction ($U_K$) est formé à partir d'un autre signal qui représente la forme géométrique du récipient (1) dans la zone de l'ensemble d'électrodes.

**3.** Circuit selon les revendications 1 ou 2, **caractérisé en ce que** le circuit d'évaluation des signaux présente un compteur totalisateur (16), dans lequel le signal de correction ($U_K$) est formé.

**4.** Circuit selon l'une quelconque des revendications précédentes, **caractérisé en ce que** le circuit d'évaluation des signaux présente une unité de corrélation (17), laquelle capte le deuxième signal à tension continue ($U_M$) provenant du deuxième canal (10) ainsi que le signal de correction ($U_K$), et génère à partir de cela un signal de niveau de remplissage ($U_F$) représentant le niveau actuel de remplissage.

**5.** Circuit selon l'une quelconque des revendications précédentes, **caractérisé en ce que** le premier canal (8) et le deuxième canal (10) sont agencés de manière identique d'un point de vue électrique avec la même caractéristique, mais présentent cependant des amplifications différentes lors du fonctionnement.

**6.** Circuit selon l'une quelconque des revendications précédentes, **caractérisé en ce qu'**à la sortie (30) de la génératrice de courant alternatif (6) couplée avec la partie à électroconduction du récipient (1), un troisième canal (11) est raccordé de manière capacitive, lequel est identique au premier et au deuxième canal d'un point de vue électrique et présente une amplification fixe.

**7.** Circuit selon l'une quelconque des revendications précédentes, **caractérisé en ce que** chaque canal (8, 10, 11) présente un couplage en série formé par un amplificateur de courant alternatif et un redresseur.

**8.** Circuit selon l'une quelconque des revendications 4 à 6, **caractérisé en ce que** le circuit d'évaluation des signaux comprend un circuit de valeur limite (19, 20) qui capte le deuxième signal à tension continue ($U_M$), le signal de consigne ($U_0$), et le signal de sortie amplifié et démodulé ($U_{GA}$) de la génératrice de courant alternatif (6), et qui est couplé du côté de la sortie avec l'unité de corrélation (17) de manière à ce qu'en cas de niveau de remplissage trop faible, le signal de niveau de remplissage ($U_F$) soit mis à zéro.

**9.** Circuit selon la revendication 8, **caractérisé en ce qu'**un dispositif d'alarme (21) est raccordé du côté de la sortie au circuit de valeur limite.

**10.** Circuit selon l'une quelconque des revendications précédentes, **caractérisé en ce que** le signal de consigne ($U_0$) est choisi de manière à représenter le niveau de remplissage maximal.

**11.** Circuit selon l'une quelconque des revendications précédentes, **caractérisé par** un dispositif de réglage (13, 14) qui est alimenté du côté de l'entrée avec le deuxième signal à tension continue ($U_M$), avec le signal de sortie ($U_{GA}$) amplifié et démodulé de la génératrice de courant alternatif (6), et avec le signal de consigne ($U_0$), pour le réglage des amplifications du premier et du deuxième canal.

**12.** Circuit selon la revendication 11, **caractérisé en ce que** le dispositif de réglage présente un comparateur (13) avec le cas échéant un dispositif de signalisation (14) branché en aval.

**13.** Circuit selon l'une quelconque des revendications précédentes, avec un récipient (1) possédant, au moins dans la zone de l'ensemble des électrodes, une section transversale constante et en particulier cylindrique, **caractérisé en ce que** le signal de correction ($U_K$) est formé selon la relation suivante :

$$U_K = U_{GA}(U_0 - U_M)/(U_0 - U_{GA})$$

**14.** Circuit selon la revendication 13, **caractérisé en ce que** l'unité de corrélation est un soustracteur (17), lequel est en liaison du côté de l'entrée avec la sortie du deuxième canal (10) et avec la sortie du compteur totalisateur (16).

**15.** Circuit selon les revendications 13 ou 14, **caractérisé en ce que** le circuit d'évaluation des signaux présente une source de tension continue (15), à partir de laquelle le signal de consigne ($U_0$) est acheminé vers une entrée du compteur totalisateur (16), une entrée de l'amplificateur de réglage (9), ainsi que vers le circuit de valeur limite (19, 20).

**16.** Circuit selon l'une quelconque des revendications 13 à 15, **caractérisé en ce qu'**un dispositif de conformation des signaux (18) est branché en aval du soustracteur (17), lequel dispositif de conformation forme, à partir du signal de niveau de remplissage ($U_F$), un signal standardisé de signalisation du niveau de remplissage.

**17.** Circuit selon l'une quelconque des revendications 13 à 16, **caractérisé en ce que** le circuit de valeur limite présente une bobine égalisatrice (20) raccordée à la source de tension continue (15) du côté de l'entrée, laquelle forme à partir du signal de consigne ($U_0$) une fraction déterminée par la valeur limite inférieure du niveau de remplissage, et l'achemine vers un deuxième comparateur (19), lequel capte du côté de l'entrée le signal de sortie ($U_{GA}$) amplifié et démodulé de la génératrice de courant alternatif (6), et est en liaison du côté de la sortie avec une entrée de remise à l'état initial du soustracteur (17).

**18.** Circuit selon la revendication 17, **caractérisé en ce que** l'autre comparateur (19) est en liaison du côté de la sortie avec le dispositif d'alarme (21).

EP 0 916 930 B1